(19) **Europäisches Patentamt / European Patent Office / Office européen des brevets**

(11) **EP 4 289 539 A1**

(12) # EUROPEAN PATENT APPLICATION

(43) Date of publication:
   **13.12.2023 Bulletin 2023/50**

(21) Application number: **23176007.5**

(22) Date of filing: **30.05.2023**

(51) International Patent Classification (IPC):
   **B23F 21/06** $^{(2006.01)}$       **B23F 23/00** $^{(2006.01)}$
   **B23P 15/28** $^{(2006.01)}$       **G05B 19/18** $^{(2006.01)}$
   **G06F 30/20** $^{(2020.01)}$       **B23F 5/16** $^{(2006.01)}$
   **B23P 15/14** $^{(2006.01)}$

(52) Cooperative Patent Classification (CPC):
   **B23F 23/00; B23F 21/06; G05B 19/186;**
   **G06F 30/20;** B23F 5/163; G05B 2219/45214

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(30) Priority: **06.06.2022 TW 111120945**

(71) Applicant: **National Central University**
   **Taoyuan City 32001 (TW)**

(72) Inventor: **WU, Yu-Ren**
   **32001 Taoyuan City (TW)**

(74) Representative: **Viering, Jentschura & Partner**
   **mbB**
   **Patent- und Rechtsanwälte**
   **Am Brauhaus 8**
   **01099 Dresden (DE)**

(54) **GEAR SKIVING CUTTER AND DESIGNING METHOD THEREOF**

(57) The present invention provides a designing method of a gear skiving cutter that includes: constructing a cutter manufacturing tool and a base material for the gear skiving cutter, wherein the cutter manufacturing tool includes a plurality of asymmetrical tooth structures; simulating relative movements of the cutter manufacturing tool and the base material based on multi-axes in a relative motion coordinate system to have the cutter manufacturing tool process the surface of the base material; and forming a plurality of cut teeth on the base material by the plurality of tooth structures of the cutter manufacturing tool. Wherein an outer contour of each cut tooth is designed in advance so that gear teeth on a gear workpiece with a planned grinding allowance can be formed when the gear workpiece is processed by the gear skiving cutter. The grinding allowance on either side of each gear tooth can be kept uniform, and the grinding allowance on both sides of each gear tooth can be closely the same.

S1

constructing a cutter manufacturing tool and a base material for the gear skiving cutter, wherein the cutter manufacturing tool includes a plurality of tooth structures, a center of each tooth structure corresponds to a base plane and each tooth structure includes a first side portion and a second side portion opposite to the first side portion, the first side portion forms a first grinding allowance structure raised toward the base plane and the second side portion forms a second grinding allowance structure raised toward the base plane, wherein the first grinding allowance structure is different from the second grinding allowance structure, so that each tooth structure forms an asymmetrical structure based on the base plane.

S2

simulating relative movements of the cutter manufacturing tool and the base material based on a relative motion coordinate system, so that the plurality of tooth structures of the cutter manufacturing tool contact the base material to perform a surface processing, so as to form a plurality of cut teeth on the base material, wherein each cut tooth includes an outer contour and a rake plane formed at an end of the outer contour, and each rake plane including a rake angle and a side edge angle.

FIG. 1

**Description**

FIELD OF THE INVENTION

The present invention relates to a designing method of a gear skiving cutter, especially a designing method capable of designing a gear skiving cutter with grinding allowance. The present invention also includes the gear skiving cutter made by the designing method.

BACKGROUND OF THE INVENTION

Gears are common operational parts and can be manufactured in different materials according to different requirements. Take cylindrical gears for example. When such gears are used as parts for transportation vehicles or measurement equipment with high precision, they are mostly made from metals or alloy metals that are hard enough for the sake of operational stability and sustainability. For such gears, gear skiving is one of the machining process to manufacture the teeth thereof.

Conventional gear skiving process can be regarded as a relative motion of helical gears along crossed axes. It mainly use a skiving cutter in a gear shape to rotate in high speed and contact a gear workpiece that is also rotated in high speed for simultaneous movements along multi axes. The skiving cutter is able to cut the gear workpiece by using a cutting edge of a rake plane in a similar meshing operation, so as to form the teeth profile on the gear workpiece. However, the profiles on both sides of the cutting edge are asymmetrical due to the design of the rake plane of the conventional skiving cutter with a rake angle and a side edge angle, causing uneven grinding allowance/stock on both sides of each tooth of the gear workpiece to produce errors of the tooth surface profile. Consequently, the precision of the formed gear workpiece will be greatly reduced. Without further grinding, such gear workpieces tend to cause malfunctioning problems on the machines or equipment with high precision they are installed. In addition, the uneven grinding allowance on both sides of each tooth of the gear workpiece would result in increased grinding period and costs.

Therefore, it is an issue to be resolved that how to provide a designing method for gear skiving cutters that can design and control the shape of the cutting surface on both sides of the gear skiving cutter in advance, so as to improve the problem of uneven grinding allowance occurred on the gear workpiece in the machining process.

SUMMARY OF THE INVENTION

An objective of the present invention is to provide a designing method of a gear skiving cutter with grinding allowance.

To achieve the objective mentioned above, the designing method includes: constructing a cutter manufacturing tool and a base material for the gear skiving cutter and simulating relative movements of the cutter manufacturing tool and the base material based on a relative motion coordinate system. The cutter manufacturing tool includes a plurality of tooth structure; a center of each tooth structure corresponds to a base plane and includes a first side portion and a second side portion opposite to the first side portion. The first side portion forms a first grinding allowance structure raised toward the base plane and the second side portion forms a second grinding allowance structure raised toward the base plane; wherein the first grinding allowance structure is different from the second grinding allowance structure, so that each tooth structure forms an asymmetrical structure based on the base plane. Simulating relative movements of the cutter manufacturing tool and the base material based on the relative motion coordinate system is for the plurality of tooth structures of the cutter manufacturing tool to contact the base material to perform a surface processing, so as to form a plurality of cut teeth on the base material. Wherein each cut tooth includes an outer contour and a rake plane formed at an end of the outer contour, and each rake plane including a rake angle and a side edge angle.

In an embodiment, the first grinding allowance structure includes a first action surface and the second grinding allowance structure includes a second action surface, and at least one of the first action surface and the second action surface is a plane or a curved surface.

In an embodiment, the first action surface is a curved surface that is curved toward a direction approaching the base plane, and the second action surface is a curved surface that is curved toward a direction away from the base plane.

In an embodiment, a cross-section plane perpendicular to the base plane of each tooth forms a first line segment with the first action surface of the first grinding allowance structure and forms a second line segment with the second action surface of the second grinding allowance structure. The first and second line segments can be obtained by an equation as following:

$$\begin{cases} x_n = (-1)^d u \\ y_n = \sum_{i=0}^{q} a_i u^i \end{cases}, \; q = 1 \text{ or } 2, \; u_e \leq u \leq u_f$$

where $u$ is the line segment parameter, $u_e$ is the line segment parameter that is the closest to a root section of a tooth, $u_f$ is the line segment parameter that is the closest to a opening section of a tooth, $a_i$ is the variable coefficient for the y-component of the line segment, $q$ is the given coefficient of the equation, d is a symbol for defining the line segment, d=1 for the first line segment and d=2 for the second line segment.

In an embodiment, before constructing the cutter manufacturing tool and the base material for the gear skiving cutter, a planned grinding allowance for each tooth section of the gear workpiece is determined in advance, thereby a cutting edge profile of the rake plane on each cut tooth can be derived in reverse from the planned grinding allowance, and the first grinding allowance structure and the second grinding allowance structure of each tooth structure on the cutter manufacturing tool can be modified by the cutting edge profile.

In an embodiment, by constructing an imaginary helical gear that is conjugated with the gear workpiece, a plurality of first intersecting points between the imaginary helical gear and the cutting edge profile are found, and a plurality of second intersecting points between a normal plane of the imaginary helical gear and a plurality of helix curves passing through the plurality of first intersecting points on the imaginary helical gear are found, and then a grinding allowance corresponding to the second intersecting points can be obtained to determine the variable coefficients corresponding $a_i$ to the first line segment and the second line segments for modifying the first grinding allowance structure and the second grinding allowance.

In an embodiment, the relative motion coordinate system includes a first coordinate system and a second coordinate system, the cutter manufacturing tool moves based on the first coordinate system and the base material of the gear skiving cutter moves based on the second coordinate system, and movements of the cutter manufacturing tool is mapped to movements of the base material by using a coordinate transformation matrix, thereby motion trajectories and meshing states of the cutter manufacturing tool relative to the base material can be simulated to obtain the outer contour of the plurality of cut teeth.

In an embodiment, the cutter manufacturing tool is moving linearly along a first axis in the first coordinate system and the base material of the gear skiving cutter is rotating around a second axis in the second coordinate system; the first axis is not parallel to the second axis.

Furthermore, the present invention includes a gear skiving cutter made by the designing method described above; the gear skiving cutter corresponds to center axis and includes a first side, a second side and a plurality of cut teeth. The second side is arranged correspondingly to the first side. Each of the cut teeth has a rake plane near the first side and an outer contour arranged between the first side and second side. Wherein the center axis is not perpendicular to the rake plane, so that the rake plane forms a rake angle and a side edge angle with respect to a cross-section plane perpendicular to the center axis, and the outer contour is not parallel to the center axis, so that the outer contour forms a relief angle and a side clearance angle with respect to the center axis.

In an embodiment, the outer contour of each cut tooth is tapered as it extends away from the rake plane.

BRIEF DESCRIPTION OF THE DRAWINGS

FIG. 1 is a flow diagram of a designing method of a gear skiving cutter according to the present invention;
FIG. 2(a) is a schematic diagram illustrating a partial contour of a cutter manufacturing tool by simulation in an embodiment according to the present invention;
FIG. 2(b) is a schematic diagram illustrating a tooth of the cutter manufacturing tool by simulation in an embodiment according to the present invention;
FIG. 3(a) is a schematic diagram illustrating a partial contour of the cutter manufacturing tool by simulation in another embodiment according to the present invention;
FIG. 3(b) is a schematic diagram illustrating a tooth of the cutter manufacturing tool by simulation in another embodiment according to the present invention;
FIG. 4(a) is a perspective view of a base material for a gear skiving cutter according to the present invention;
FIG. 4(b) is a perspective view of the gear skiving cutter according to the present invention;
FIG. 5(a) is a perspective view of a cut tooth on the gear skiving cutter according to the present invention;
FIG. 5(b) is a sectional view of the cut tooth in FIG. 5(a) along line A-A;

FIG. 5(c) is a sectional view of the cut tooth in FIG. 5(a) along line B-B;

FIG. 6 is a schematic diagram illustrating a relative motion coordinate system applied in the cutter manufacturing tool and the gear skiving cutter;

FIG. 7(a) is a schematic diagram illustrating a simulation of an imaginary helical gear and the gear skiving cutter being conjugate with a gear workpiece according to the present invention;

FIG. 7(b) is a schematic diagram illustrating a planned grinding allowance to be calculated by the outer contour of the imaginary helical gear according to the present invention;

FIG. 8 is a schematic diagram illustrating the gear skiving cutter produced by the designing method performing a skiving process on the gear workpiece according to the present invention;

FIG. 9 is a schematic diagram illustrating topological diagrams and error of tooth section surface on an internal gear skived by different gear skiving cutters made by different manufacturing procedures;

FIG. 10 is a schematic diagram illustrating topological diagrams and error of tooth section surface on an external gear skived by different gear skiving cutters made by different manufacturing procedures;

FIG. 11 is a schematic diagram illustrating error of tooth section surface on an internal gear skived by the gear skiving cutter made by the designing method of the present invention in an embodiment; and

FIG. 12 a schematic diagram illustrating error of tooth section surface on an external gear skived by the gear skiving cutter made by the designing method of the present invention in an embodiment.

## DETAILED DESCRIPTION OF THE PREFERRED EMBODIMENTS

In order to fully comprehend the objectives, features and efficacy of the present invention, a detailed description is described by the following substantial embodiments in conjunction with the accompanying drawings. The description is as below.

The description of unit, element and component in the present invention uses "one", "a", or "an". The way mentioned above is for convenience, and for general meaning of the category of the present invention. Therefore, the description should be understood as "include one", "at least one", and include the singular and plural forms at the same time unless obvious meaning.

The description of ordinal numbers for elements or components in the present invention are mainly for similar parts or structures and do not indicate any order in sequence in time or space arrangement. Under certain conditions or combinations, the elements or components described with ordinal numbers are interchangeable within the scopes of the present invention.

The description of comprise, have, include, contain, or another similar semantics has the non-exclusive meaning. For example, an element, structure, product, or device contain multi requirements are not limited in the list of the content, but include another inherent requirement of element, structure, product or device not explicitly listed in the content. In addition, the term "or" has an inclusive meaning instead of an exclusive one.

The designing method of the present invention is for gear skiving cutter design, and the gear skiving cutter made by the designing method is utilized to perform power skiving process on a gear workpiece in order to form a plurality of tooth sections on the gear workpiece. In the following descriptions, the designing method of the present invention is performed by computer simulations that produces a simulated profile curve of a cutter manufacturing tool in advance and then simulates to perform a surface machining on a base material of the gear skiving cutter by the simulated cutter manufacturing tool with the profile curve, so as to design the gear skiving cutter. After these procedures, another computer simulation can be performed to have the simulated gear skiving cutter performing power skiving on a gear workpiece to be formed according to the aforementioned simulation results or the simulated gear skiving cutter can be produced into a real gear skiving cutter according to the aforementioned simulation results for further procedure of producing the gear workpiece. However, the present invention is not limited thereto. For example, a real cutter manufacturing tool can be manufactured according to the present invention to perform the surface machining on a base material for the gear skiving cutter, so as to manufacture the gear skiving cutter for real.

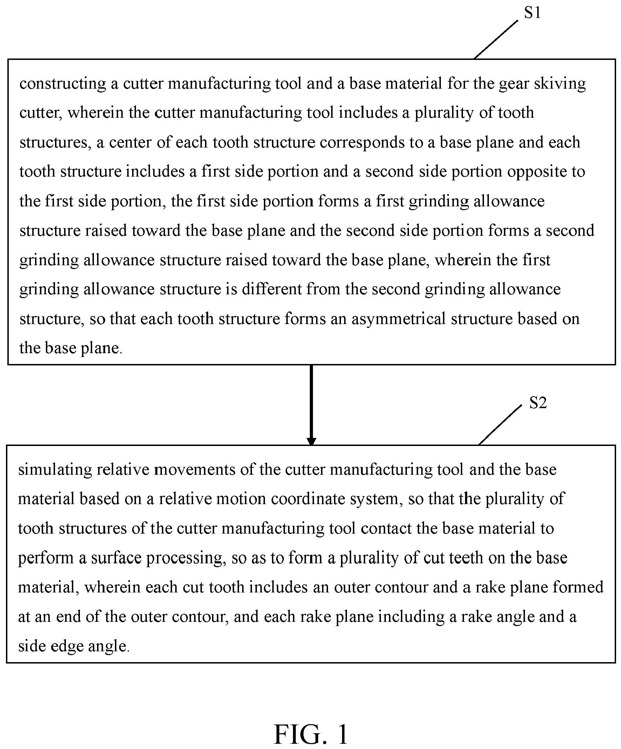

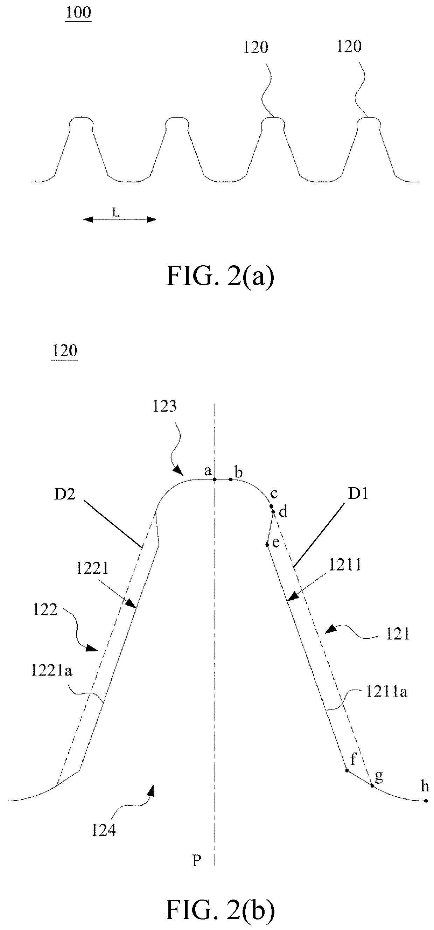

Referring to FIGS. 1-2(b), FIG. 1 is a flow diagram of a designing method of a gear skiving cutter according to the present invention, FIG. 2(a) is a schematic diagram illustrating a partial contour of a cutter manufacturing tool by simulation in an embodiment according to the present invention, and FIG. 2(b) is a schematic diagram illustrating a tooth of the cutter manufacturing tool by simulation in the embodiment. As shown in FIG. 1, the designing method of a gear skiving cutter includes the following steps:

Step S1: constructing a cutter manufacturing tool and a base material for the gear skiving cutter. The cutter manufacturing tool includes a plurality of tooth structures. A center of each tooth structure corresponds to a base plane and each tooth structure includes a first side portion and a second side portion opposite to the first side portion. The first side portion includes a first grinding allowance structure raised toward the base plane and the second side portion includes a second grinding allowance structure raised toward the base plane; wherein the first grinding allowance structure is different from the second grinding allowance structure, so that each tooth structure forms an asymmetrical structure based on the base plane.

First, before designing the gear skiving cutter, the cutter manufacturing tool and the base material for the gear skiving cutter need to be constructed. The gear skiving cutter is formed by having the cutter manufacturing tool (or a cutting tool having a conjugate relationship with the cutter manufacturing tool) perform the surface machining on the base material.

As shown in FIG. 2(a), the cutter manufacturing tool 100 constructed in the present invention includes a plurality of tooth structures 120. The plurality of tooth structures 120 are arranged along a linear direction L with equal spacing intervals. The thickness direction and the height direction of each tooth structure 120 are perpendicular to the linear direction L, and the width direction of each tooth structure 120 is parallel to the linear direction L. In FIG. 2(a), it is assumed that a plane along the width direction of the plurality of tooth structures 120 intersects with the plurality of tooth structures 120 to form a cross-section, and presents the contour curve and shape of the plurality of tooth structures 120 as shown in Fig. 2(a). In fact, a combination of the plurality of cross-sections formed by interlacing the plurality of tooth structures 120 with a plurality of planes parallel to the aforementioned planes can construct a 3-dimensional structure of the plurality of tooth structures 120. In an embodiment, the contour curves of the plurality of tooth structures 120 of the cutter manufacturing tool 100 can be designed by using pre-determined structural parameters for the computer simulation, so as to facilitate subsequent simulations of the surface processing on a base material for a gear skiving cutter. For example, assuming the cutter manufacturing tool 100 constructed based on the aforementioned simulation results can be a rack cutter; the plurality of tooth structures 120 would be formed at a side of the cutter manufacturing tool 100 to be in contact with the base material of the gear skiving cutter. However, the present invention is not limited thereto. The cutter manufacturing tool 100 can be a wheel cutter or a cutter in any forms.

In the following, only the appearance of a single tooth structure 120 among the plurality of tooth structures 120 will be described in detail, and the appearance of the single tooth structure 120 can be analogized to other tooth structures 120. As shown in FIG. 2(b), each tooth structure 120 corresponds to a base plane P which is perpendicular to the width direction of the tooth structure 120 and parallel to the thickness direction of the tooth structure 120, and the tooth structure 120 is divided into two similar parts by the base plane P.. In FIG. 2(b), based on the base plane P, the contour curves of one side of the tooth structure 120 is divided into a plurality of line segments from point a to point h, in order to illustrate the design of the toothed structure 120, and the other opposite side of the tooth structure 120 can also be deduced accordingly.

Each of the tooth structures 120 includes a first side portion 121, a second side portion 122 opposite to the first side portion 121, a root section 123 and a opening end 124. The first side portion 121 and the second side portion 122 are arranged between the root section 123 and the opening end 124, and the first side portion 121 and the second side portion 122 are located on two sides of the reference plane P respectively. In an embodiment, taking the side of the tooth structure 120 having the first side portion 121 as an example, the root portion 123 of the tooth structure 120 corresponds to the line segment a-b and the line segment b-c, the first side portion 121 of the tooth structure 120 corresponds to the line segment c-d, line segment d-e, line segment e-f and line segment f-g, and the opening end 124 of the tooth structure 120 corresponds to the line segment g-h; and the other side of the tooth structure 120 having the second side portion 122 can also adopt a similar line segment distinction. The width of each tooth structure 120 tapers from the opening end 124 to the root portion 123 to form a tooth profile. In design, the first side portion 121 of the tooth structure 120 forms a first grinding allowance structure 1211 raised toward the base plane P and the second side portion 122 forms a second grinding allowance structure 1221 raised toward the base plane P, so as to make the tooth structure 120 form the profile similar to that of a knob tooth. In the present invention, the first grinding allowance structure 1211 is different from the second grinding allowance structure 1221. Accordingly, even though the first side portion 121 and the second side portion 122 of the tooth structure 120 have similar contours, the tooth structure 120 still forms an asymmetric structure based on the base plane P due to the structural differences between the first grinding allowance structure 1211 and the second grinding allowance structure 1221.

In an embodiment, the line segments *a-b, c-d, d-e* and *f-g* are straight lines, while the line segments *b-c* and *g-h* are arc lines, but the present invention is not limitedto. Each aforementioned line segment can vary depending on needs. Furthermore, the line segment e-f can be a straight line or a curved line depending on requirements.

In terms of structural design,, a first modification height of the first grinding allowance structure 1211 is different from a second modification height of the second grinding allowance structure 1221. As shown in FIG. 2(b), the first grinding allowance structure 1211 includes a first action surface 1211a and the second grinding allowance structure 1221 includes a second action surface 1221a. During the surface processing on the base material for the gear skiving cutter 200, each tooth structure 120 of the cutter manufacturing tool 100 directly contacts the surface of the base material of the gear skiving cutter 200 through the first action surface 1211a and the second action surface 1221a to process and produce the outer contour of the gear skiving cutter 200. The first modification height is defined as a perpendicular distance from any point on the first action surface 1211a to a first contour line D1 which is the contour line of the first side portion 121 before forming the first grinding allowance structure 1211(as shown by the dotted line extended from the line segment *c-d* in FIG. 2(b)). Herein, the perpendicular distance from the points on the first action surface 1211a of the first side portion 121 to the first contour line D1 is regarded as a grinding allowance for the first side portion 121 of the tooth structure 120. The second modification height is defined as a perpendicular distance from any point on the second action surface 1221a to a second contour line D2 which is the contour line of the second side portion 122 before forming the second grinding allowance structure 1221 (as shown by the other dotted line in FIG. 2(b)). Herein, the perpendicular distance from the points on the second action surface 1221a of the second side portion 122 to the second contour line D2 is regarded as a grinding allowance for the second side portion 122. The design of the grinding allowance described here will further affect the changes of the outer profiles of the gear skiving cutter and/or the gear workpiece made later on.

For example, in this embodiment, an average value of the first modified height of the first grinding allowance structure 1211 is less than an average value of the second modified height of the second grinding allowance structure 1221, but the present invention is not limited thereto. The value of the first modified height of the first grinding allowance structure 1211 and the second modified height of the second grinding allowance structure 1221 can be exchanged. Accordingly, the two sides of each tooth structure 120 of the cutting manufacturing tool 100 used in the present invention correspond to different grinding allowances by the first allowance structure 1211 and the second allowance structure 1221 with different modification heights, so as to facilitate the subsequent design and forming of the gear skiving cutter. A gear with pre-determined grinding allowance on both sides of each gear tooth can be processed by using the formed gear skiving cutter. The grinding allowance on either side of each gear tooth can be kept uniform, and the grinding allowance on both sides of each gear tooth can be almost the same.

The first action surface 1211a of the first allowance structure 1211 and the second cutting surface 1221a of the second allowance structure 1221 can be obtained by calculating equations. As shown in FIG. 2(b), the cross-section of the tooth structure 120 forms a first line segment with the first action surface 1211a of the first grinding allowance structure 1211 and forms a second line segment with the second action surface 1221a of the second grinding allowance structure 1221. (Take the first line segment for example, in FIG. 2(b), the first line segment based on the first side portion 121 is the line segment e-f, in which the point e is the endpoint of the first line segment closest to the root portion 123 and the point f is the endpoint of the first line segment closest to the opening end 124.) The first action surface 1211a is composed of a plurality of first line segments and the second action surface 1221a is composed of a plurality of second line segments. The first line segment and the second line segment can be obtained by the following equations:

$$\begin{cases} x_n = (-1)^d u \\ y_n = \sum_{i=0}^{q} a_i u^i \end{cases}, \; q = 1 \text{ or } 2, \, u_e \leq u \leq u_f \qquad (1)$$

where $n$ represents any point between point e and point f in the line segment, $u$ is the line segment parameter, $u_e$ is the line segment parameter that is the closest to the root portion 123 (such as point e), $u_f$ is the line segment parameter that is the closest to the opening end 124 (such as point f), $a_i$ is the variable coefficient for the y-component of the line segment, $q$ is the given coefficient of the equations, and d is a symbol for defining the line segment. In the above equations, d=1 corresponds to the first line segment, and d=2 corresponds to the second line segment. As the parameter design of the first line segment or the second line segment corresponding to the tooth structure 120 is different (that is, the designs of the first action surface 1211a of the first grinding allowance structure 1211 and the second action surface 1221a of the second grinding allowance structure 1221 are different), the value of $u_e$, $u_f$ and $a_i$ would change accordingly.

In the present invention, the first action surface 1211a of the first grinding allowance structure 1211 and the second action surface 1221a of the second grinding allowance structure 1221 can be different structures according to different design requirements of the gear skiving cutter to be formed. As shown in FIG. 2(b), in an embodiment, when $q=1$, the equations for the first line segment and the second line segment are both linear functions. Therefore, the first action surface 1211a of the first grinding allowance structure 1211 formed by combining the plurality of first line segments is a plane, and the second action surface 1221a of the second grinding allowance structure 1221 formed by combining the plurality of second line segments is also a plane. For example, the first grinding allowance structure 1211 can extend toward the base plane P to a pre-determined height through the sidewalls formed on both sides (corresponding to line segment d-e and line segment f-g), and then form a top plane at the pre-determined height as the first action surface 1211a (corresponding to line segment e-f). Similarly, the second grinding allowance structure 1221 can extend toward the base plane P to another pre-determined height through the sidewalls formed on both sides, and then form a top plane at the pre-determined height as the second action surface 1221a. At this time, the equations of the first line segment and the second line segment can be shown as follows:

$$x_n = u \qquad \text{(The first line segment)} \qquad x_n = -u \qquad \text{(The second line segment)}$$

$$y_n = a_1u + a_0 \quad \text{(The first line segment)} \qquad y_n = a_1u + a_0 \qquad \text{(The second line segment)}$$

Herein, the value range of the line segment parameter $u$ corresponding to the first line segment and the second line segment and the variable coefficients $a_1$ and $a_0$ can be different.

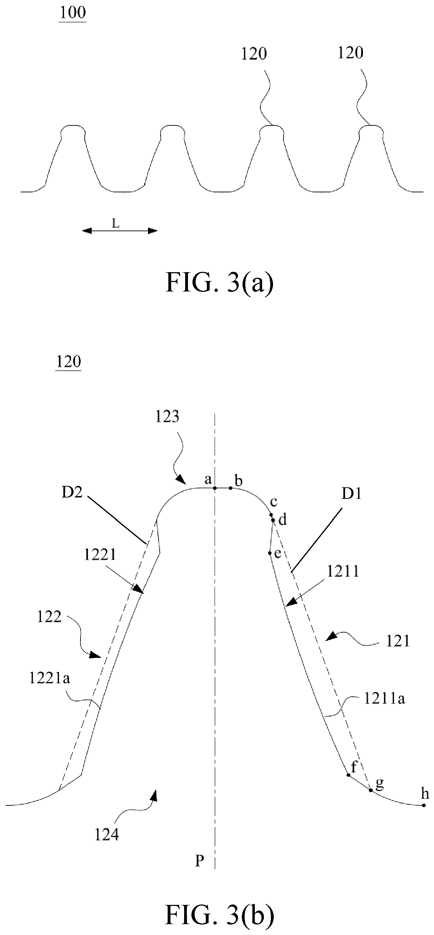

Referring to FIGS. 3(a) and 3(b), FIG. 3(a) is a schematic diagram illustrating a partial contour of the cutter manufacturing tool by simulation in an embodiment according to the present invention and FIG. 3(b) is a schematic diagram illustrating a tooth of the cutter manufacturing tool by simulation in the embodiment. As shown in FIG. 3(a) and FIG. 3(b), in this embodiment, when $q=2$, the equations of the first line segment and the second line segment are both quadratic functions. Therefore, the first action surface 1211a of the first grinding allowance structure 1211 formed by combining the plurality of first line segments is a curved surface, and the second action surface 1221a of the second grinding allowance structure 1221 formed by combining the plurality of second line segments is also a curved surface. For example, the first grinding allowance structure 1211 can extend toward the base plane P to a pre-determined height through the sidewalls formed on both sides (corresponding to the line segment d-e and line segment f-g), and then form a curved surface raised toward the base plane P at the pre-determined height as the first action surface 1211a (corresponding to the line segment e-f). Moreover, the second grinding allowance structure 1221 can extend toward the base plane P by the sidewalls formed on both sides to another pre-determined height, and then form a curved surface that raises inversely towards the base plane P at the pre-determined height as the second active surface 1221a. At this time, the equations of the first line segment and the second line segment can be shown as follows:

$$x_n = u \qquad \text{(The first line segment)} \quad x_n = -u \qquad \text{(The second line segment)}$$

$$y_n = a_2u^2 + a_1u + a_0 \quad \text{(The first line segment)} \quad y_n = a_2u^2 + a_1u + a_0 \quad \text{(The second line segment)}$$

Herein, the value range of the line segment parameter $u$ corresponding to the first line segment and the second line segment and the variable coefficients $a_2$, $a_1$ and $a_0$ can be different. In addition to the aforementioned embodiments, the first line segment and the second line segment corresponding to two sides of the tooth structure can also be a linear function and a quadratic function respectively; that is, the first action surface 1211a of the first grinding allowance structure 1211 may be a plane, and the second action surface 1221a of the second grinding allowance structure 1221 may be a curved surface, but the present invention is not limited thereto.

Step S1: simulating relative movements of the cutter manufacturing tool and the base material for the gear skiving cutter based on a relative motion coordinate system, so that the plurality of tooth structures of the cutter manufacturing tool contact the base material to perform the surface processing, so as to form a plurality of cut teeth on the base material; wherein each cut tooth includes an outer contour and a rake plane formed at an end of the outer contour, and each rake plane includes a rake angle and a side edge angle.

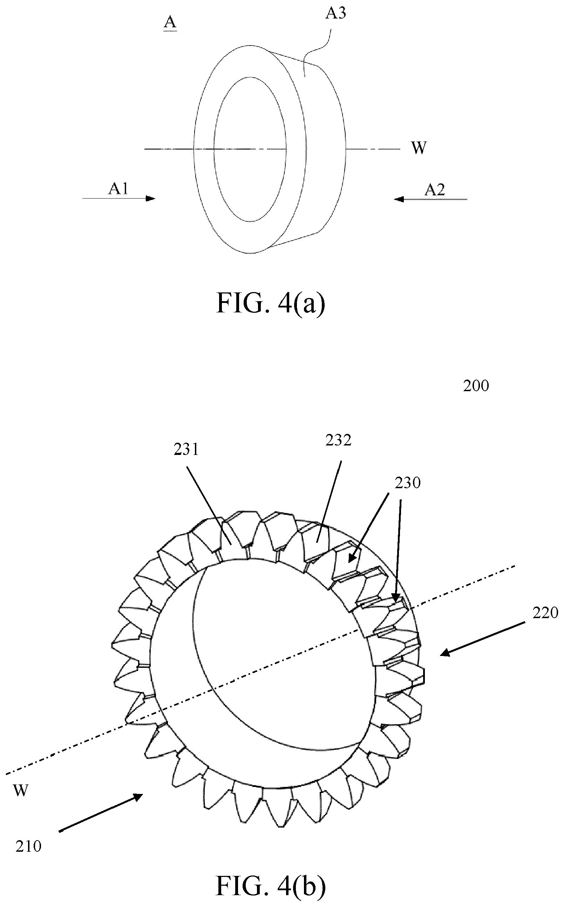

The structural design of the gear skiving cutter constructed by the present invention will be described below. Referring to FIG. 4(a) and FIG. 4(b) together, wherein FIG. 4(a) is a perspective view of the base material for a gear skiving cutter according to the present invention and FIG. 4(b) is a perspective view of the gear skiving cutter made according to the present invention. As shown in FIG. 4(a), the base material A for the gear skiving cutter corresponds to a center axis W, and the base material A includes a first side A1 and a second side A2 opposite to the first side A1. The first side A1 and the second sides A2 individually form a circular plane that is perpendicular to the center axis W. The area of the first side A1 is greater than the area of the second side A2. The cutter manufacturing tool performs the surface processing on the first side A1 and an outer surface A3 between the first side A1 and the second side A2. It should be noted that, in the present invention, the base material A of the gear skiving cutter is described by using a conical structure (that is, the side profile of the structure is a straight line) as an example, but the base material A of the gear skiving cutter can also adopt a structure similar to a semi-barrel or barrel shape (that is, the side profile of the structure is a quadratic curve), and the present invention is not limited thereto.

Additionally, a planned grinding allowance for the gear workpiece and a plurality of specification parameters of the cutter manufacturing tool and the gear skiving cutter can be determined in advance before constructing the cutter manufacturing tool and the base material A, thereby the cutter manufacturing tool and the base material A can be constructed according to the planned grinding allowance and the specification parameters. Among them, the planned grinding allowance of the gear workpiece is the most important, because it would further affect the profile and the amount of the grinding allowance of the first second grinding allowance structure and the second grinding allowance structure of each tooth structure of the cutter manufacturing tool, and the outer contour of the cut teeth of the gear skiving cutter. The plurality of specification parameters include the depth, spacing and amount of the plurality of tooth structures of the cutter manufacturing tool, the module and helix angle of the gear skiving cutter and other necessary parameters, so as to produce the gear skiving cutter with the specifications required.

As shown in FIG. 4(b), the gear skiving cutter 200 is produced by simulating the cutter manufacturing tool 100 to perform the surface processing on the base material A in FIG. 4(a). The gear skiving cutter 200 includes a first side 210, a second side 220 and a plurality of cut teeth 230. The second side 220 is arranged correspondingly to the first side 210. The plurality of cut teeth 230 are formed on an outer surface of the gear skiving cutter 200 between the first side 210 and the second side 220. Each cut tooth 230 extends from the first side 210 toward the second side 220 and includes a rake plane 231 and an outer contour 232.

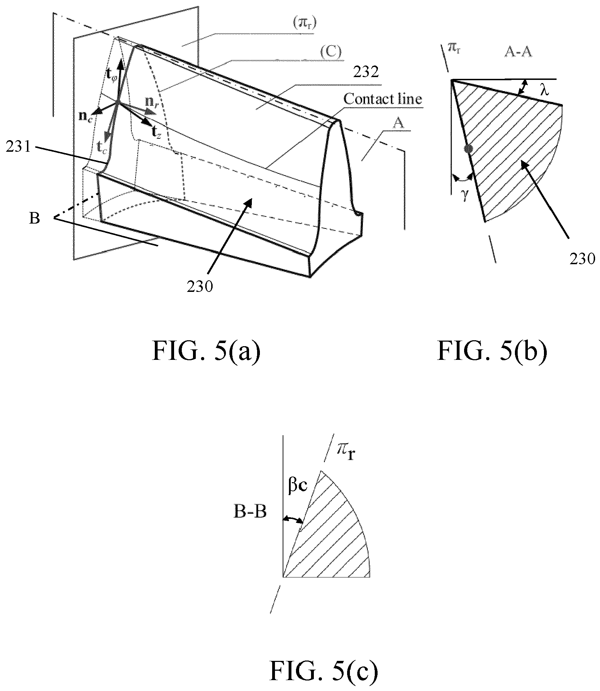

Referring to FIGS. 4(b)-5(c), FIG. 5(a) is a perspective view of a cut tooth on the gear skiving cutter according to the present invention, FIG. 5(b) is a sectional view of the cut tooth in FIG. 5(a) along line A-A, and FIG. 5(c) is a sectional view of the cut tooth in FIG. 5(a) along line B-B. As shown in FIG. 4(b) to FIG. 5(c), the rake plane 231 of each cut tooth 230 is formed near the first side 210 and is not perpendicular to the center axis W; the outer contour 232 of each cut tooth 230 is arranged between the first sides 210 and the second side 220. Therefore, between the rake plane 231 and a cross-section plane perpendicular to the center axis W, a rake angle $\gamma$ and a side edge angle $\beta$**c** are formed. The rake angle $\gamma$ is defined as the angle between the cross-section plane perpendicular to the center axis W and the rake plane 231 in a perpendicular direction, and the side edge angle $\beta$**c** is defined as the angle between the cross-section plane and the rake plane 231 in a horizontal direction. Furthermore, the outer contour 232 of each cut tooth 230 is tapered as it extends away from the rake plane 231, so that each cut tooth 230 of the gear skiving cutter 200 form a relief angle $\lambda$, and the relief angle $\lambda$ is defined as the angle between the top of the outer contour 232 and the center axis W in a perpendicular direction. The rake plane 231 is on a plane $\pi_r$ and has a cutting edge profile **C.**

By pre-determining the value of the relief angle, the present invention is able to construct the plurality of cut teeth of the base material with corresponding specifications. Also, by pre-determining the value of the rake angle and the side edge angle, the cross-section plane corresponding to the rake plane of the cut tooth can be further determined, thereby the cutting edge profile of the rake plane can be obtained to construct the rake plane of the cut tooth with corresponding specifications.

Back to the step S2, after constructing the cutter manufacturing tool and the base material for the gear skiving cutter, in order to make the cutter manufacturing tool and the base material of the gear skiving cutter perform relative motions to perform surface processing of the base material, the relative motion coordinate system applied in the cutter manufacturing tool and the base material must be established first.

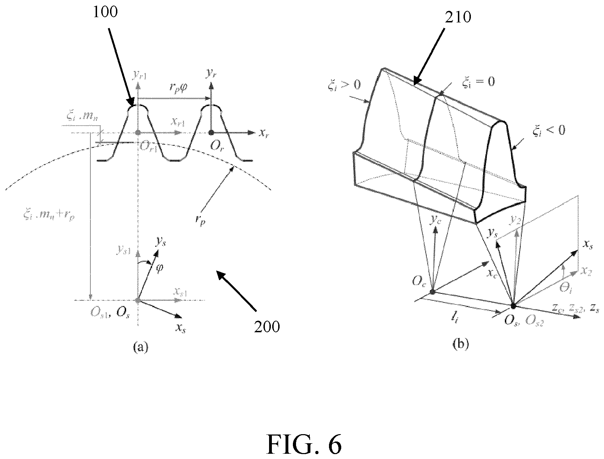

Referring to FIG. 6, which is a schematic diagram illustrating a relative motion coordinate system applied in the cutter manufacturing tool and the gear skiving cutter. As shown in FIG. 6, in the present invention, the relative motion coordinate system includes a first coordinate system $S_r(x_r,y_r,z_r)$, a second coordinate system $S_s(x_s,y_s,z_s)$ and a third coordinate system $S_c(x_c,y_c,z_c)$; each coordinate system is independent. The cutter manufacturing tool **100** moves based on the first coordinate system $S_r(x_r,y_r,z_r)$ (the reference point thereof is $O_r$) and the base material for the gear skiving cutter 200 moves based on the second coordinate system $S_s(x_s,y_s,z_s)$ (the reference point thereof is $O_s$). The third coordinate system $S_c(x_c,y_c,z_c)$ (the reference point thereof is $O_c$) corresponds to a transverse cross-section plane of the base material for the gear skiving cutter 200. The cutter manufacturing tool 100 is moved linearly along a first axis $x_r$ based on the first coordinate system $S_r(x_r,y_r,z_r)$ and the base material for the gear skiving cutter 200 is rotated around a second axis $z_s$ based on the second coordinate system $S_s(x_s,y_s,z_s)$; the first axis $x_r$ and the second axis $z_s$ are not parallel. In an embodiment, when the cutter manufacturing tool 100 is a rack cutter, the first axis $x_r$ is in the direction parallel to the width direction of the tooth structure 120 of the cutter manufacturing tool 100, and the second axis $z_s$ is the center axis of the base material for the gear skiving cutter 200. The cutter manufacturing tool 100 would perform a linear movement along the first axis $x_r$. In FIG. 6(a), $\varphi$ represents a rotation angle of the gear skiving cutter 200; when the gear skiving cutter 200 rotates at the angle $\varphi$, the cutter manufacturing tool 100 would translate a distance of $r_p* \varphi$ correspondingly, where $r_p$ is the pitch radius of the base material. In FIG. 6(b), an angle $\theta$ represents a rotation angle of the helical surface on the outer contour of the gear skiving cutter 200.

The movements of the cutter manufacturing tool 100 based on the first coordinate system $S_r(x_r,y_r,z_r)$ is mapped to the movements on the transverse section of the base material based on the third coordinate system $S_c(x_c,y_c,z_c)$ by using coordinate transformation matrixes, so as to obtain the trajectory equations of the outer contours of the plurality of cut teeth formed by the cutter manufacturing tool 100 on the surface of the base material of the gear skiving tool 200. The aforementioned transformation matrixes are shown in the following:

$$\mathbf{M}_{cr}\left(\varphi,l_i\right)=\mathbf{M}_{cs}\left(l_i\right)\mathbf{M}_{sr}\left(\varphi,l_i\right) \tag{2}$$

$$\mathbf{M}_{sr} = \begin{bmatrix} \cos\varphi & -\sin\varphi & 0 & r_p\varphi\cos\varphi - \left(\xi_i m_n + r_p\right)\sin\varphi \\ \sin\varphi & \cos\varphi & 0 & r_p\varphi\sin\varphi + \left(\xi_i m_n + r_p\right)\cos\varphi \\ 0 & 0 & 1 & 0 \\ 0 & 0 & 0 & 1 \end{bmatrix}$$

(3)

$$\mathbf{M}_{cs} = \begin{bmatrix} \cos\theta_i & -\sin\theta_i & 0 & 0 \\ \sin\theta_i & \cos\theta_i & 0 & 0 \\ 0 & 0 & 1 & l_i \\ 0 & 0 & 0 & 1 \end{bmatrix}$$

(4)

wherein $M_{cr}$ is the transformation matrix from the first coordinate system $S_r(x_r,y_r,z_r)$ to the third coordinate system $S_c(x_c,y_c,z_c)$, $M_{cs}$ is the transformation matrix from the second coordinate system $S_s(x_s,y_s,z_s)$ to the third coordinate system $S_c(x_c,y_c,z_c)$, $M_{sr}$ is the transformation matrix from the first coordinate system $S_r(x_r,y_r,z_r)$ to the second coordinate system $S_s(x_s,y_s,z_s)$, $\varphi$ is the rotation angle of the base material for the gear skiving cutter 200, $l_i$ is the z-component of the transverse section of the base material for the gear skiving cutter 200, $m_n$ is the modulus of the base material, $\zeta_i$ is the profile shifted coefficient of the base material, $\theta_i$ is the helix angle of the cross-section of the base material.

The aforesaid trajectory equations are shown in the following:

$$\mathbf{r}_c\left(u,\varphi,l_i\right) = \mathbf{M}_{cr}\left(\varphi,l_i\right)\mathbf{r}_r\left(u\right), \ i = 1 \sim n_{sc}$$

(5)

$$\mathbf{n}_c\left(u,\varphi,l_i\right) = \mathbf{L}_{cr}\left(\varphi,l_i\right)\mathbf{n}_r\left(u\right)$$

(6)

wherein r, is the position vector of the base material for the gear skiving cutter 200, $r_r$ is the position vector of the cutter manufacturing tool 100, $n_c$ is the unit normal vector of the base material for the gear skiving cutter 200, $n_r$ is the unit normal vector of the cutter manufacturing tool **100,** $L_{cr}$ is the upper left submatrix of the first 3x3 elements in $M_{cr}$, $n_{sc}$ is the number of the transverse sections for the base material of the gear skiving cutter 200.

When the cutter manufacturing tool 100 contacts the base material for surface processing, a meshing equation shown in the following should be satisfied:

$$f_0 = \mathbf{n}_c \cdot \frac{\partial \mathbf{r}'_c\left(u,\varphi,l_i\right)}{\partial\varphi} = 0, \ i = 1 \sim n_{sc}$$

(7)

where $r'_c$ is the vector of the first 3 elements of the position vector $r_c$ of the base material for the gear skiving cutter 200. and the rotation angle φ of each section of the tool in the base material of the gear skiving tool 20 can be obtained . Accordingly, the line segment parameter $u$ of the cutter manufacturing tool 100 and the z-component $l_i$ of the transverse section of the base material are substituted in the equation (7), and the rotation angle $\varphi$ of each section of the base material of the gear skiving tool 20 can be obtained. Then, by substituting each set of the $(u, \varphi, l_i)$ parameters into the trajectory equations (5) and (6), the position vector and the unit normal vector of the outer contour of each transverse section of the base material can be determined, so as to establish the contour point data of the plurality of cut teeth of the base material. Finally, a three-dimensional outer contour of the cut tooth can be formed by using the curve fitting method to combine the contour point data of each section.

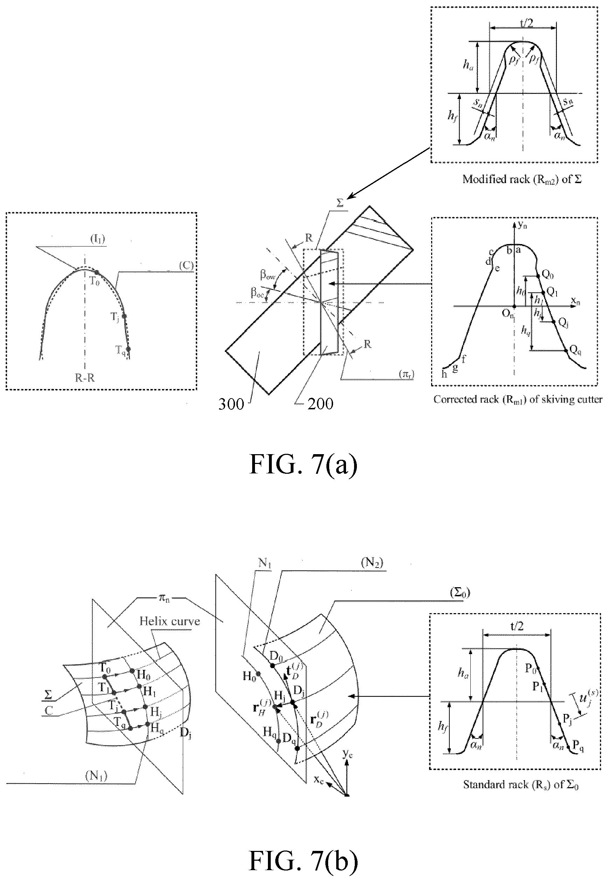

In the present invention, before constructing the cutter manufacturing tool and the base material for the gear skiving cutter, a planned grinding allowance of each tooth section of the gear workpiece can be determined in advance. The cutting edge profile of the rake plane of each tool tooth of the gear skiving cutter can be derived in reverse from the planned grinding allowance, and the first grinding allowance structure and the second grinding allowance structure of each tooth structure of the cutter manufacturing tool can be modified by the cutting edge profile. Referring to FIGS. 7(a) and 7(b), FIG. 7(a) is a schematic diagram illustrating a simulation of an imaginary helical gear and the gear skiving cutter being conjugate with the gear workpiece, and FIG. 7(b) is a schematic diagram illustrating the planned grinding allowance to be calculated by the outer contour of the imaginary helical gear. As shown in Fig. 7(a) and Fig. 7(b), it is assumed that the planned grinding allowance $Sn$ of each tooth section of the gear workpiece 300 is determined in advance before the cutter manufacturing tool 100, and an imaginary helical gear $\Sigma$ which is conjugated with the gear workpiece 300 and forms each tooth portion with the planned grinding allowance $Sn$ is constructed. The imaginary helical gear $\Sigma$ and the gear skiving cutter 200 are both conjugate with the gear workpiece 300. Herein it is assumed that the imaginary helical gear $\Sigma$ is made by a correction rack (as cutter manufacturing tool) with the planned grinding allowance $Sn$ corresponding to the imaginary bevel gear $\Sigma$, and the gear skiving cutter 200 is made by a correction rack (as cutter manufacturing tool) corresponding to the gear skiving cutter 200. Although the outline of the imaginary helical gear $\Sigma$ cannot match the outline of the gear skiving cutter 200, based on the plane $\pi_r$ corresponding to the rake plane of the gear skiving cutter 200, the outline of the imaginary helical gear $\Sigma$ would intersect with the plane $\pi_r$ to form an intersecting line $I_1$, and the outer contour of the gear skiving cutter 200 would intersect with the surface plane $\pi_r$ to form the cutting edge contour C of the rake plane. The intersecting line $I_1$ and the cutting edge contour C would intersect partially to form a plurality of intersecting points $T_j$ ($j$=0~$q$). (The plurality of intersecting points $T_j$ can be derived from the aforesaid transformation matrixes and the meshing equations based on a plurality of intersecting points $Q_j$.)

Since each intersecting point $T_j$ corresponds to a helical curve of the imaginary helical gear $\Sigma$, a plurality of intersecting points $H_j$ ($j$=0~$q$) corresponding to the plurality of helical curves of the intersecting points $T_j$ and a normal plane $\pi_n$ of the imaginary helical gear $\Sigma$, and a normal profile $N_1$ on the normal plane $\pi_n$, crossing the intersecting points $H_j$ can be further derived. Next, an imaginary helical gear $\Sigma_0$ created by a standard rack (as cutter manufacturing tool) without grinding allowance can be constructed. The imaginary helical gear $\Sigma_0$ and the previously imaginary helical gear $\Sigma$ have the same normal plane $\pi_n$. The imaginary helical gear $\Sigma_0$ corresponds to a normal profile $N_2$ crossing a plurality of intersecting points $D_j$, and the plurality of intersecting points $D_j$ can be derived by the aforesaid transformation matrixes and meshing equations based on a plurality of points $P_j$. Thereby, by calculating the distance between any intersecting point $H_j$ on the normal profile $N_1$ and the intersecting point $D_j$ at the corresponding position on the normal profile $N_2$ along the normal direction of the normal profile $N_2$, the variable coefficients $a_i$ of the first line segment and the second line segment of the cutter manufacturing tool can be derived in reverse, so as to correct the outline of the cutter manufacturing tool which can actually produce the gear workpiece 300 with planned grinding allowance $Sn$.

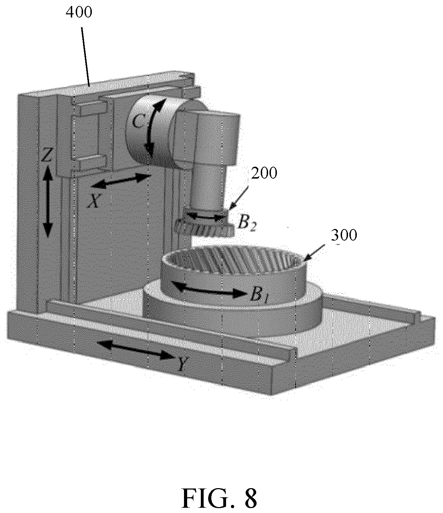

FIG. 8 is a schematic diagram illustrating the gear skiving cutter produced by the designing method thereof performing a skiving process on the gear workpiece according to the present invention. As shown in FIG. 8, in an embodiment, the gear skiving cutter 200 designed by the designing method of the present invention utilizes a CNC gear skiving machine 400 manufactured by Gleason (model number: 300PS) to perform the skiving processing for different gear workpieces 300. For example, in FIG. 8, the gear workpiece 300 is an internal gear, but the present invention is not limited thereto. The gear workpiece 300 can also be an external gear. This CNC gear skiving machine 400 controls operations in 6 axis directions including 3 linear operations (corresponding to the $X$, $Y$, $Z$ axes) and 3 rotational operations (corresponding to the $C$, $B_1$, $B_2$ axes). The relative movement and position between the gear skiving cutter 200 and the gear workpiece 300 are controlled by the operations in the $X$, $Y$, $Z$ and C axes and the rotations of the gear skiving cutter 200 and the gear workpiece 300 are controlled by the operations in the $B_1$ and $B_2$ axes, so that the tooth section surface of the gear workpiece 300 can be skived by the gear skiving cutter 200.

The gear skiving cutter designed by the designing method of the present invention will be simulated to performing the skiving processing for different gear workpieces to prove the gear skiving effect of the designed gear skiving cutter below. In this embodiment, the relevant specification parameters of the gear skiving cutter and the gear workpiece are shown in Table 1.

Table 1

| Specification parameters (symbols) | Unit | Values | |
|---|---|---|---|
| | | Gear workpiece | Gear skiving cutter |
| Module($m_n$) | mm | 3 | 3 |
| Pressure angle($\alpha$) | Degree | 20 | - |
| Helix angle($\beta$) | Degree | 5 | 15 |
| Tooth number($Z$) | - | 90 | 25 |
| Width of the tooth(b) | mm | 18 | |

(continued)

| Specification parameters (symbols) | Unit | Values | |
| --- | --- | --- | --- |
| | | Gear workpiece | Gear skiving cutter |
| Profile shifted coefficient($\zeta$) | - | 0 | 0.14 |
| rake angle($\gamma$) | Degree | - | 5 |
| Relief angle($\lambda$) | Degree | - | 6 |

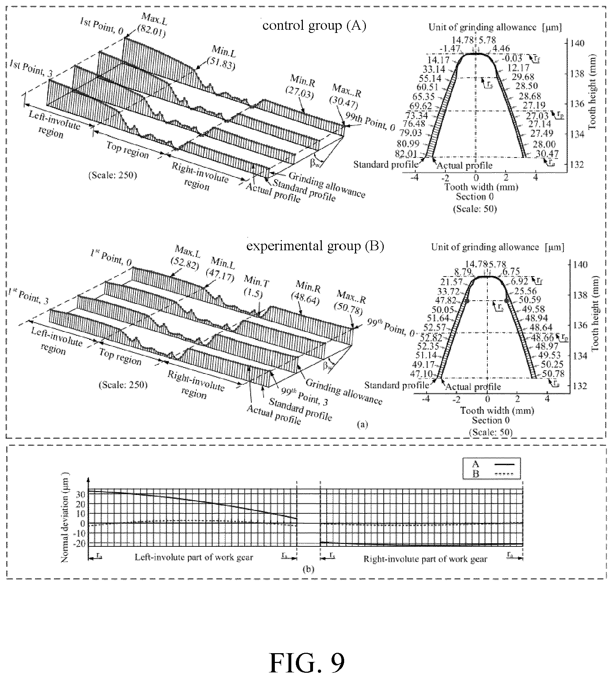

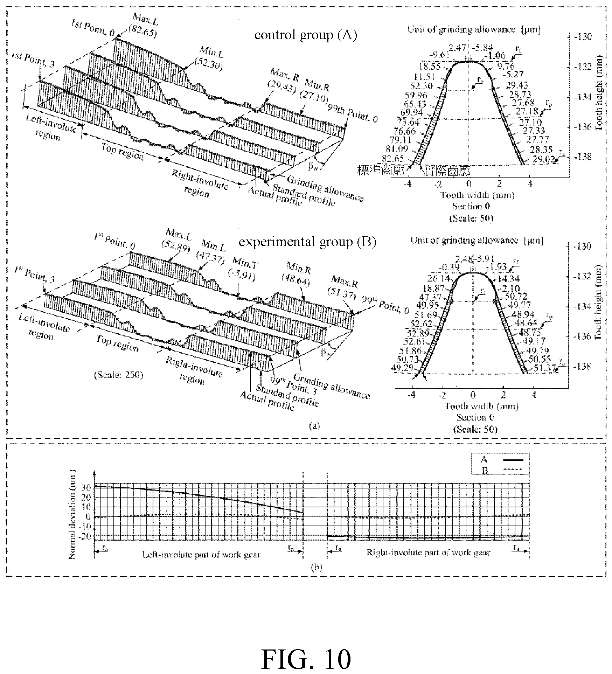

Referring to FIGS. 9 and 10, FIG. 9 is a schematic diagram illustrating topological diagrams and error of tooth section surface on an internal gear skived by different gear skiving cutters made by different manufacturing procedures, and FIG. 10 is a schematic diagram illustrating topological diagrams and error of tooth section surface on an external gear skived by different gear skiving cutters made by different manufacturing procedures. In the following description, the gear skiving cutter formed by the cutter manufacturing tool with asymmetrical grinding allowance structures on both sides of each tooth structure is an experimental group, and the gear skiving cutter formed by the cutter manufacturing tool with symmetrical grinding allowance structures on both sides of each tooth structure is a control group. Under the same setting conditions, the cutter manufacturing tools of the control group and the experimental group are used to simulate the skiving processing on the gear workpiece, and then the processing results of the experimental group and the control group are compared to prove the practical effect of the designing method of the gear skiving cutter of the present invention. In an embodiment, it is assumed that the first line segment and the second line segment of the cutter manufacturing tool of the present invention are both linear functions (i.e., q=1), the planned grinding allowance of the gear workpiece is 50$\mu$m, the first grinding allowance structure of the cutter manufacturing tool has a grinding allowance of 32.17$\mu$m and the pressure angle of 23.32 ° and the second grinding allowance structure of the cutter manufacturing tool has a grinding allowance of 71.21 $\mu$m and the pressure angle of 19.98°. After substituting the above parameters into the relevant equations for calculation, the equations of the first line segment of the first grinding allowance structure can be obtained as follows:

$x = u$
$y = 6.271 - 2.750\ u$, where 1.517 (mm) $\leqq u \leqq$ 3.371 (mm)

And the equations of the second line segment of the second grinding allowance structure can be obtained as follows:

$x = -u$
$y = 6.273 - 2.701\ u,$ where 1.545 (mm) $\leqq u \leqq$ 3.433 (mm)

Simulated skiving processing on both the internal gear and external gear are respectively performed by the simulated gear skiving cutter formed by the cutter manufacturing tool according to the present invention and by the CNC gear skiving machine. The topology of the tooth section surface can be calculated in accordance with the results shown in the left of FIG. 9, and the normal error of each segment of the tooth profile between the standard tooth profile (as the outmost tooth profile shown in the right of FIG. 9) and the actual tooth profile (as the inner tooth profile shown in the right of FIG. 9) can be obtained. Then, the numerical differences between the normal errors of the tooth surface of the gear workpiece and the planned grinding allowance of the tooth surface of the gear workpiece are compared according to the simulation results to judge the quality of the tooth skiving processing. In an embodiment, the planned grinding allowance of the gear workpiece is 50$\mu$m. As shown in FIG. 9, for the internal gear, maximum normal errors of the left involute segment of the tooth profile (such as the tooth profile from the radius $r_s$ to radius $r_a$) of the control group and experimental group are 32.01$\mu$m and 2.90$\mu$m respectively, and maximum normal errors of the right involute segment of the tooth profile (such as the tooth profile from the radius $r_s$ to radius $r_a$) of the control group and experimental group are 22.97$\mu$m and 1.36$\mu$m respectively. As shown in FIG. 10, for the external gear, the maximum normal errors of the left involute segment of the tooth profile of the control group and experimental group are 32.65$\mu$m and 2.89$\mu$m respectively, and the maximum normal errors of the right involute segment of the tooth profile of the control group and experimental group is 22.90$\mu$m and 1.37$\mu$m respectively. The maximum normal error occurs around the top pitch circle on both the internal and external gears. It is obvious that the skiving process performed by the gear skiving cutter according to the designing method of the present invention has better efficacy than the conventional gear skiving cutter. The gear skiving cutter of the present invention can provide machining precision with lower error and make both sides of the machined tooth profile more uniform.

In an embodiment, it is assumed that the first line segment and the second line segment of the cutter manufacturing tool of the present invention are both linear functions (i.e., q=1), and the first line segment and the second line segment of another cutter manufacturing tool of the present invention are both quadratic functions (i.e., $q$=2). The results of the skiving processing on an internal gear performed by different gear skiving cutters designed by different cutter manufacturing tools can be compared. In this embodiment, the relevant specification parameters of the gear workpiece and the gear skiving cutters are the same as the previous embodiments, except the planned grinding allowance of the gear workpiece is adjusted to 100$\mu$m, the tooth number of the gear workpiece is adjusted to 60 and the helix angle is adjusted to 20°. After substituting the above parameters into the relevant equations for calculation, the equations of the first line segment of the first grinding allowance structure and the second line segment of the second grinding allowance structure corresponding to different cutter manufacturing tools are shown in Table 2.

Table 2

| Function types | Line segments | Equations | Range (mm) |
|---|---|---|---|
| Quadratic functions | First line segment | $x = M$ <br> $y = 6.196 - 2.796\,u - 0.009\,u^2$ | $1.472 \leqq u \leqq 3.326$ |
| | Second line segment | $x = -u$ <br> $y = 6.038 - 2.605\,u - 0.019\,u^2$ | $1.494 \leqq u \leqq 3.383$ |
| Linear functions | First line segment | $x = M$ <br> $y = 6.141 - 2.750\,u$ | $1.470 \leqq u \leqq 3.324$ |
| | Second line segment | $x = -u$ <br> $y = 6.144 - 2.701\,u$ | $1.497 \leqq u \leqq 3.385$ |

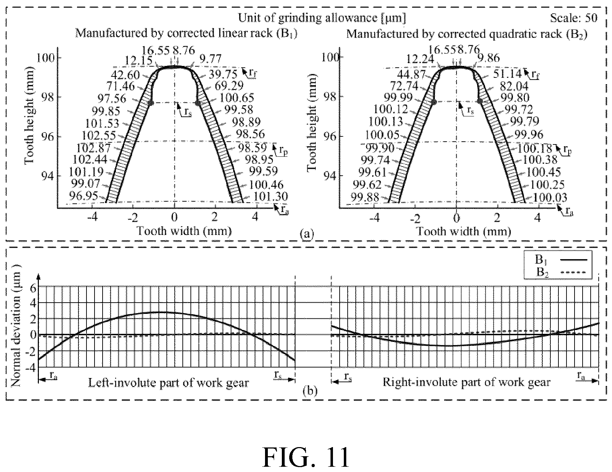

Referring to FIG. 11 which is a schematic diagram illustrating error of tooth section surface on an internal gear skived by the gear skiving cutter made by the designing method of the present invention. A simulated skiving processing on the internal gear is performed by the simulated gear skiving cutter formed by the cutter manufacturing tool according to the present invention and by the CNC gear skiving machine. Similarly, the numerical differences between the normal errors of the tooth surface of the gear workpiece and the planned grinding allowance of the tooth surface of the gear workpiece are compared according to the simulation results to judge the quality of the tooth skiving processing. As shown in FIG. 11, for the internal gear, the maximum normal error of the involute segment of the tooth profile (such as the tooth profile from the radius $r_s$ to radius $r_a$) formed by the cutter manufacturing tool with linear functions is 3.05$\mu$m, and the maximum normal error of the involute segment of the tooth profile (such as the tooth profile from the radius $r_s$ to radius $r_a$) formed by the cutter manufacturing tool with quadratic functions is 0.45$\mu$m. From the results we can see that the gear skiving cutter formed by the cutter manufacturing tool with quadratic functions has the normal error being 2.60$\mu$m lower than the one with linear functions for the internal gear, which is significantly lower. And the error on both sides of the tooth profile is more even and smooth, fitting closer to the value of the planned grinding allowance and significantly increasing the precision of the gear skiving.

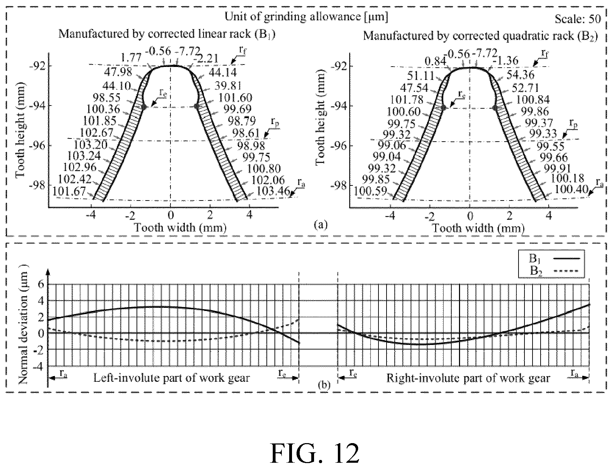

Referring to FIG. 12 which is a schematic diagram illustrating error of tooth section surface on an external gear skived by the gear skiving cutter made by the designing method of the present invention. A simulated skiving processing on the external gear is performed by the simulated gear skiving cutter formed by the cutter manufacturing tool according to the present invention and by the CNC gear skiving machine. As shown in FIG. 12, for the external gear, the maximum normal error of the involute segment of the tooth profile (such as the tooth profile from the radius $r_s$ to radius $r_a$) formed by the cutter manufacturing tool with linear functions is 3.46$\mu$m, and the maximum normal error of the involute segment of the tooth profile (such as the tooth profile from the radius $r_s$ to radius $r_a$) formed by the cutter manufacturing tool with quadratic functions is 1.78$\mu$m. From the results we can also see that the gear skiving cutter formed by the cutter manufacturing tool with quadratic functions has the normal error being 1.68$\mu$m lower than the one with linear functions, which is also significantly lower. And the error on both sides of the tooth profile is also more even and smooth, fitting closer to the value of the planned grinding allowance and significantly increasing the precision of the gear skiving as well.

The present invention is disclosed by the preferred embodiments in the aforementioned description; however, it is contemplated for one skilled at the art that the embodiments are applied only for an illustration of the present invention rather than are interpreted as a limitation for the scope of the present invention. It should be noted that the various substantial alternation or replacement equivalent to these embodiments shall be considered as being covered within the scope of the present invention. Therefore, the protection scope of the present invention shall be defined by the claims.

**Claims**

1. A designing method of a gear skiving cutter, the gear skiving cutter is used to perform skiving process on a gear workpiece, the designing method comprising:

   constructing a cutter manufacturing tool and a base material for the gear skiving cutter, wherein the cutter manufacturing tool includes a plurality of tooth structures, a center of each tooth structure corresponds to a base plane and each tooth structure includes a first side portion and a second side portion opposite to the first side portion, the first side portion forms a first grinding allowance structure raised toward the base plane and the second side portion forms a second grinding allowance structure raised toward the base plane, wherein the first grinding allowance structure is different from the second grinding allowance structure, so that each tooth structure forms an asymmetrical structure based on the base plane; and
   simulating relative movements of the cutter manufacturing tool and the base material based on a relative motion coordinate system, so that the plurality of tooth structures of the cutter manufacturing tool contact the base material to perform a surface processing, so as to form a plurality of cut teeth on the base material, wherein each cut tooth includes an outer contour and a rake plane formed at an end of the outer contour, and each rake plane including a rake angle and a side edge angle.

2. The designing method defined in claim 1, wherein the first grinding allowance structure includes a first action surface and the second grinding allowance structure includes a second action surface, and at least one of the first action surface and the second action surface is a plane or a curved surface.

3. The designing method defined in claim 2, wherein the first action surface is a curved surface that is curved toward a direction approaching the base plane, and the second action surface is a curved surface that is curved toward a direction away from the base plane.

4. The designing method defined in claims 2 or 3, wherein a cross-section plane perpendicular to the base plane of each tooth structure forms a first line segment with the first action surface of the first grinding allowance structure and forms a second line segment with the second action surface of the second grinding allowance structure; the first and second line segments being obtained by equations as following:

$$\begin{cases} x_n = (-1)^d u \\ y_n = \sum_{i=0}^{q} a_i u^i \end{cases}, \ q = 1 \text{ or } 2, \ u_e \leq u \leq u_f$$

   where $u$ is the line segment parameter, $u_e$ is the line segment parameter that is the closest to a root section of a tooth, $u_f$ is the line segment parameter that is the closest to a opening end of a tooth, $a_i$ is the variable coefficient for the y-component of the line segment, $q$ is the given coefficient of the equation, d is a symbol for defining the line segment, d=1 for the first line segment and d=2 for the second line segment.

5. The designing method defined in claim 1, wherein a planned grinding allowance for each tooth section of the gear workpiece is determined in advance before constructing the cutter manufacturing tool and the base material for the gear skiving cutter, thereby a cutting edge profile of the rake plane on each cut tooth can be derived in reverse from the planned grinding allowance and the first grinding allowance structure and the second grinding allowance structure of each tooth structure on the cutter manufacturing tool can be modified by the cutting edge profile.

6. The designing method defined in claim 5, wherein, by constructing an imaginary helical gear that is conjugated with the gear workpiece, a plurality of first intersecting points between the imaginary helical gear and the cutting edge profile are found, and a plurality of second intersecting points between a normal plane of the imaginary helical gear and a plurality of helix curves passing through the plurality of first intersecting points on the imaginary helical gear are found, and then a grinding allowance corresponding to the second intersecting points can be obtained to determine the variable coefficients $a_i$ corresponding to the first line segment and the second line segment for modifying the first grinding allowance structure and the second grinding allowance structure.

7. The designing method defined in claim 4, wherein the relative motion coordinate system includes a first coordinate system and a second coordinate system, the cutter manufacturing tool moves in the first coordinate system and the base material of the gear skiving cutter moves in the second coordinate system, and movements of the cutter manufacturing tool is mapped to movements of the base material by using coordinate transformation matrixes, thereby motion trajectories and meshing states of the cutter manufacturing tool relative to the base material can be simulated to obtain the outer contour of the plurality of cut teeth.

8. The designing method defined in claim 6, wherein the cutter manufacturing tool is moving linearly along a first axis in the first coordinate system and the base material of the gear skiving cutter is rotating around a second axis in the second coordinate system, and the first axis is not parallel to the second axis.

9. A gear skiving cutter made by the designing method defined in any of claims 1-8, the gear skiving cutter corresponding to a center axis and comprising:

   a first side;
   a second side arranged correspondingly to the first side; and
   a plurality of cut teeth, each cut tooth including a rake plane near the first side and an outer contour arranged between the first side and the second side; wherein the center axis is not perpendicular to the rake plane, so that the rake plane forms a rake angle and a side edge angle with respect to a cross-section plane perpendicular to the center axis, and the outer contour is not parallel to the center axis, so that the outer contour forms a relief angle and a side clearance angle with respect to the center axis.

10. The gear skiving cutter defined in claim 9, wherein the outer contour of each cut tooth is tapered as it extends away from the rake plane.

11. A designing method of a gear skiving cutter, the gear skiving cutter is used to perform skiving process on a gear workpiece, the designing method comprising:

   determining a planned grinding allowance of each tooth section of the gear workpiece;
   reversing to obtain a cutting edge profile of a rake plane of each cut tooth on the gear skiving cutter by the planned grinding allowance;
   modifying a first grinding allowance structure and a second grinding allowance structure of each tooth structure of a cutter manufacturing tool based on the cutting edge profile; wherein the first grinding allowance structure is different from the second grinding allowance structure, so that each tooth structure forms an asymmetrical structure based on a base plane; and
   simulating relative movements between the cutter manufacturing tool and a base material of the gear skiving cutter based on a relative motion coordinate system, so that the plurality of tooth structures of the cutter manufacturing tool contact the base material to perform a surface process, so as to form a plurality of cut teeth on the base material; wherein each cut tooth includes an outer contour and a rake plane arranged at an end of the outer contour, each rake plane including a rake angle and a side edge angle and the outer contour including a relief angle.

S1

constructing a cutter manufacturing tool and a base material for the gear skiving cutter, wherein the cutter manufacturing tool includes a plurality of tooth structures, a center of each tooth structure corresponds to a base plane and each tooth structure includes a first side portion and a second side portion opposite to the first side portion, the first side portion forms a first grinding allowance structure raised toward the base plane and the second side portion forms a second grinding allowance structure raised toward the base plane, wherein the first grinding allowance structure is different from the second grinding allowance structure, so that each tooth structure forms an asymmetrical structure based on the base plane.

S2

simulating relative movements of the cutter manufacturing tool and the base material based on a relative motion coordinate system, so that the plurality of tooth structures of the cutter manufacturing tool contact the base material to perform a surface processing, so as to form a plurality of cut teeth on the base material, wherein each cut tooth includes an outer contour and a rake plane formed at an end of the outer contour, and each rake plane including a rake angle and a side edge angle.

# FIG. 1

100

120   120

L

FIG. 2(a)

120

123

D2   a | b   c   D1
         d
         e

1221   1211

122   121

1221a

1211a

f
g
h

124

P

FIG. 2(b)

FIG. 3(a)

FIG. 3(b)

FIG. 4(a)

FIG. 4(b)

FIG. 5(a)

FIG. 5(b)

FIG. 5(c)

FIG. 6

Modified rack (R_m2) of Σ

Corrected rack (R_m1) of skiving cutter

FIG. 7(a)

Standard rack (R_s) of Σ_0

FIG. 7(b)

FIG. 8

FIG. 9

FIG. 10

FIG. 11

FIG. 12

**EP 4 289 539 A1**

EUROPEAN SEARCH REPORT

Europäisches
Patentamt
European
Patent Office
Office européen
des brevets

Application Number

EP 23 17 6007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUU TRONG-THUAN ET AL: "A novel correction method to attain even grinding allowance in CNC gear skiving process", MECHANISM AND MACHINE THEORY, PERGAMON, AMSTERDAM, NL, vol. 171, 20 February 2022 (2022-02-20), XP086974154, ISSN: 0094-114X, DOI: 10.1016/J.MECHMACHTHEORY.2022.104771 [retrieved on 2022-02-20] * the whole document * | 1-11 | INV. B23F21/06 B23F23/00 B23P15/28 G05B19/18 G06F30/20 ADD. B23F5/16 B23P15/14 |
| X | US 2020/061727 A1 (SWITZER KURT E [US]) 27 February 2020 (2020-02-27) * paragraphs [0013] - [0017]; figures 1-3 * | 9 | |
| A | WO 2017/089503 A1 (DIAMETAL AG [CH]) 1 June 2017 (2017-06-01) * claim 1 * | 1,11 | |

-/--

TECHNICAL FIELDS
SEARCHED        (IPC)

B23F
G05B
G06F
B23P

The present search report has been drawn up for all claims

| Place of search | Date of completion of the search | Examiner |
|---|---|---|
| The Hague | 19 October 2023 | Beltzung, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

27

Europäisches
Patentamt

European
Patent Office

Office européen
des brevets

**EUROPEAN SEARCH REPORT**

Application Number

**EP 23 17 6007**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOANG MINH-THUAN ET AL: "Rack Modification Method for Skiving Cutter Considering Grinding Allowance of Work Gear", PROCEEDINGS OF THE INTERNATIONAL CONFERENCE ON ADVANCED MECHANICAL ENGINEERING, AUTOMATION, AND SUSTAINABLE DEVELOPMENT 2021 (AMAS2021); 4-7/11/2021, [Online] 4 May 2022 (2022-05-04), pages 105-110, XP093089878, Cham ISSN: 2195-4356, DOI: 10.1007/978-3-030-99666-6_16 ISBN: 978-3-030-99666-6 Retrieved from the Internet: URL:https://link.springer.com/content/pdf/10.1007/978-3-030-99666-6_16> * the whole document * | 1-11 | |
| A | US 2019/255635 A1 (HÄNNI FLORIAN [CH] ET AL) 22 August 2019 (2019-08-22) * paragraphs [0082], [0088], [0097] * | 1-11 | TECHNICAL FIELDS SEARCHED (IPC) |

The present search report has been drawn up for all claims

| Place of search | Date of completion of the search | Examiner |
|---|---|---|
| The Hague | 19 October 2023 | Beltzung, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6007

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2023

| Patent document cited in search report | | | Publication date | Patent family member(s) | | | Publication date |
|---|---|---|---|---|---|---|---|
| US 2020061727 | A1 | | 27-02-2020 | CN | 112601627 | A | 02-04-2021 |
| | | | | EP | 3840904 | A1 | 30-06-2021 |
| | | | | JP | 2021534009 | A | 09-12-2021 |
| | | | | US | 2020061727 | A1 | 27-02-2020 |
| | | | | WO | 2020041066 | A1 | 27-02-2020 |
| WO 2017089503 | A1 | | 01-06-2017 | DE | 102015120477 | A1 | 01-06-2017 |
| | | | | WO | 2017089503 | A1 | 01-06-2017 |
| US 2019255635 | A1 | | 22-08-2019 | CH | 713065 | A1 | 30-04-2018 |
| | | | | CN | 109843492 | A | 04-06-2019 |
| | | | | EP | 3528989 | A1 | 28-08-2019 |
| | | | | JP | 7292203 | B2 | 16-06-2023 |
| | | | | JP | 2019531912 | A | 07-11-2019 |
| | | | | KR | 20190073417 | A | 26-06-2019 |
| | | | | TW | 201817518 | A | 16-05-2018 |
| | | | | US | 2019255635 | A1 | 22-08-2019 |
| | | | | WO | 2018073047 | A1 | 26-04-2018 |

EPO FORM P0459

For more details about this annex : see Official Journal of the European Patent Office, No. 12/82